# EUROPEAN PATENT APPLICATION

(11) **EP 0 837 403 A1**
(43) Date of publication of application: **22.04.1998**
(21) Application number: 97117817.3
(22) Date of filing: 15.10.1997
(51) Int. Cl.: G06F 17/30

(54) **Database retrieval system**

(30) Priority: 18.10.1996 JP 297317/96
(71) Applicant: NEC CORPORATION, Tokyo (JP)
(72) Inventor: Fukuoka, Hideyuki, Minato-ku, Tokyo (JP); Mizuno, Hiromi, Minato-ku, Tokyo (JP)
(74) Representative: Patentanwälte Wenzel & Kalkoff

(57) **Abstract**

A database retrieval apparatus (31-m) receives positional information on data stored in databases (51-n) scattered on a network from a directory information providing apparatus (11) at a prescribed time, and acquires desired data from a database on the basis of this positional information. Or the database retrieval apparatus receives scenario information (40) containing positional information on data stored in databases (51-n) scattered on a network (60) and temporal information indicating the time to search the databases, and acquires desired data from a position on a database indicated by positional information in accordance with temporal information contained in the scenario information (40). Thus, by having the provider of information positively convey positional information to the user, the user's voluntary computer operation is dispensed with, and the user can see desired information by merely looking at the display screen of the computer as if he was watching television.

## Description

### BACKGROUND OF THE INVENTION

### Field of the Invention

The present invention relates to a database retrieval system for retrieving desired information from a database by letting a user terminal receive from a provider of information positional information on data registered in the database.

### Description of the Related Art

In a conventional System for searching databases scattered on a network, a user possesses in advance incidental information, such as a keyword, regarding any data he or she desires to retrieve. The user acquires the desired data by voluntarily searching the databases with this incidental information as a clue.

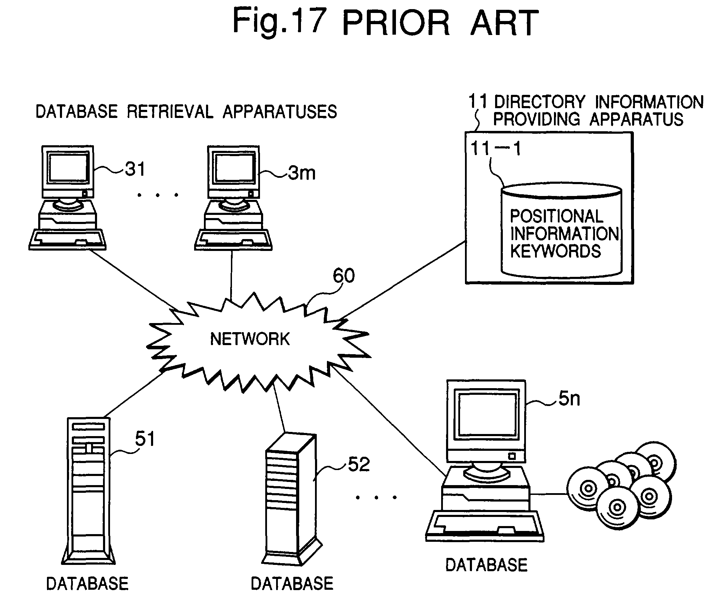

FIG. 17 illustrates an example of a database retrieval system according to the prior art. Referring to FIG. 17, a directory information providing apparatus (hereinafter called the "directory server") 11 is provided with a table 11-1 on correspondence between keywords and positional information. Upon receiving an inquiry using a keyword from a database retrieval system 3k (k may be any integer from l to m) connected via a network 60, the directory server 11 picks out positional information corresponding to this keyword, and sends it back to the database retrieval system 3k.

The database retrieval system 3k searches databases 51 through 5n on the basis of the positional information returned from the directory server 11

If, for instance, net-surfing is to be done on World Wide Web (WWW)® and if the user knows the positional information as such of the information to be acquired, he or she can search databases on the basis of that positional information, but if the positional information is unknown, the user will have no other alternative than to trace links or rely on a keyword or the like, but cannot easily find out where he or she can acquire the desired information in databases which are extensively scattered over the network.

Recently, on this WWW, there have come into extensive circulation directory services to make known what database should be accessed to obtain the needed information, such as keyword searching services typically including "Yahoo!®" and services to make known positional information according to the ten most popular items of information or information on new arrivals, including "Web-Counter", but in any case the user can only obtain positional information regarding the desired information, and beyond that he or she has to voluntarily search indefinite data to find the desired data. Thus the user is required to perform operation to acquire the desired data and, if he or she is not used to computer operation, this makes the services difficult to use and accordingly inconvenient.

The plurality of positional information pieces obtained by using a retrieval service or the like includes so-called rubbish information unwanted by the user, who is therefore required to select for himself or herself what is really needed out of that plurality of information.

Since, as stated above, all the conventional directory services require the user to voluntarily operate his or her computer, there is involved the problem that the desired information cannot be viewed unless the user voluntarily performs computer operation.

The present invention has been undertaken in view of the above-noted problem, and its object is to provide a system which causes the provider of information to positively convey positional information to the user, and thereby enables the user to dispense with computer operation and to obtain the information communicated from the provider side by merely watching the computer display screen as if he or she was watching a television program.

### SUMMARY OF THE INVENTION

A first database retrieval method according to the present invention comprises:
a first step in which a server computer transmits at a prescribed time positional information on data stored in a database on a network;
a second step in which a client computer receives said positional information; and
a third step in which the client computer acquires desired data from a position indicated by said positional information in said database on the network.

A first directory information providing apparatus according to the invention comprises:
a positional information memory for registering positional information on data stored in a database on a network;
a temporal information memory for registering temporal information indicating the time to transmit said positional information; and
communicating means for transmitting, at the time indicated by temporal information registered in said temporal information memory, positional information stored in said positional information memory to a user terminal.

In a second directory information providing apparatus according to the invention, said communicating means in the above-described first directory information providing apparatus manages a plurality of user terminals which are destinations and transmits, at the time indicated by temporal information registered in said temporal information memory, positional information stored in said positional information memory to said plurality of user terminals which are managed.

A first database retrieval apparatus according to the invention comprises:
positional information receiver for receiving positional information transmitted at a prescribed time, and
database retrieving means for acquiring desired data from the position, in said database on the network, indicated by said positional information received by said positional information receiver.

A first database retrieval system according to the invention comprises:
databases on a network;
said first or second directory information providing apparatus; and
said first database retrieval apparatus.

A second database retrieval apparatus according to the invention comprises:
a scenario receiver for receiving scenario information including positional information on data stored in a database on a network and temporal information indicating the time to refer to said positional information;
a scenario analyzer for extracting said positional information and said temporal information by analyzing said scenario information received by said scenario receiver; and
a database searcher for referring, at the time indicated by said temporal information extracted by said scenario analyzer, to said positional information extracted by said scenario analyzer, and acquiring desired information from the position indicated by that positional information in said database on the network.

A second database retrieval system according to the invention comprises:
databases on a network;
said second database retrieval apparatus, and
a scenario providing apparatus for providing said scenario information.

In a third database retrieval system according to the invention, said first database retrieval system further comprises:
a positional information collecting apparatus for collecting positional information on prescribed data stored in said database on a network, wherein:
said directory information providing apparatus is equipped with a scenario generator for generating scenario information from said positional information collected by said positional information collecting apparatus and temporal information internally held in advance.

In a fourth database retrieval system according to the invention, said second database retrieval system further comprises:
a positional information collecting apparatus for collecting positional information on prescribed data stored in said database on a network, wherein:
said scenario providing apparatus is equipped with scenario generator for generating scenario information from said positional information collected by said positional information collecting apparatus and temporal information internally held in advance.

A second database retrieval method according to the invention comprises:
a first step in which a server computer transmits positional information on data stored in a database on a network and temporal information indicating the time to refer to that positional information;
a second step in which a client computer receiver receives said scenario information;
a third step in which the client computer extracts said positional information and said temporal information from said scenario information; and
a fourth step in which the client computer acquires desired information from the position indicated by said extracted positional information in said database on the network at the time indicated by said extracted temporal information.

Next, an outline of the present invention will be described.

A database retrieval system according to the invention operates as follows.

A directory information providing apparatus transmits positional information on data stored in databases at time intervals prescribed by temporal information. Where database retrieval apparatuses of a plurality of users are simultaneously using the same directory information providing apparatus, it transmits the same positional information to the plurality of database retrieval apparatuses.

Another database retrieval system according to the invention operates as follows.

A scenario providing apparatus transmits scenario information containing positional information and temporal information upon request from a user. A database retrieval apparatus receives and analyzes that scenario information, and arranges pieces of positional information on a time axis prescribed by the temporal information. The database retrieval apparatus searches databases on a network according to the pieces of positional information arranged on the time axis, and supplies the result of search.

Still another database retrieval system according to the invention operates as follows.

A positional information collecting apparatus collects positional information from databases on a network upon request from a directory information providing apparatus or a scenario providing apparatus, and transmits it to the source of request. The directory information providing apparatus or scenario generator on the scenario providing apparatus generates a scenario on the basis of positional information received from the positional information collecting apparatus. A database retrieval apparatus, upon receiving scenario information generated by the scenario generator, searches databases on the network according to that information, and supplies the result of search.

### BRIEF DESCRIPTION OF THE DRAWINGS

Other features and advantages of the present invention will become more apparent from the detailed description hereunder when taken in conjunction with the accompanying drawings, wherein:
FIG. 1 is a flow chart showing the flow of control in a server computer in a first preferred embodiment of the invention;
FIG. 2 is a flow chart showing the flow of control in a client computer in the first preferred embodiment of the invention;
FIG. 3 is a block diagram illustrating a configuration of a directory information providing apparatus in the first preferred embodiment of the invention;
FIG. 4 is a block diagram illustrating another configuration of a directory information providing apparatus in the first preferred embodiment of the invention;
FIG. 5 is a block diagram illustrating a configuration of a database retrieval apparatus in the first preferred embodiment of the invention;
FIG. 6 is a block diagram illustrating a configuration of a database retrieval system which is the first preferred embodiment of the invention;
FIG. 7 is a block diagram illustrating how the database retrieval system which is the first preferred embodiment of the invention is applied to WWW;
FIG. 8 is a block diagram illustrating a configuration of a database retrieval apparatus in a second preferred embodiment of the invention;
FIG. 9 is a block diagram illustrating a configuration of a database retrieval system which is the second preferred embodiment of the invention;
FIG. 10 is a block diagram illustrating how the database retrieval system which is the second preferred embodiment of the invention is applied to WWW;
FIG. 11 is a block diagram illustrating a configuration of a database retrieval system which is a third preferred embodiment of the invention;
FIG. 12 is a block diagram illustrating how the database retrieval system which is the third preferred embodiment of the invention is applied to WWW;
FIG. 13 is a block diagram illustrating a configuration of a database retrieval system which is a fourth preferred embodiment of the invention;
FIG. 14 is a block diagram illustrating how the database retrieval system which is the fourth preferred embodiment of the invention is applied to WWW;
FIG. 15 is a block diagram illustrating a configuration of the fifth embodiment;
FIG. 16 is a block diagram illustrating a configuration of the fifth embodiment; and
FIG. 17 is a block diagram illustrating the configuration of a database retrieval system according to the prior art.

### DETAILED DESCRIPTION OF THE PREFERRED EMBODIMENTS

Preferred embodiments of the present invention will be described below with reference to the drawings.

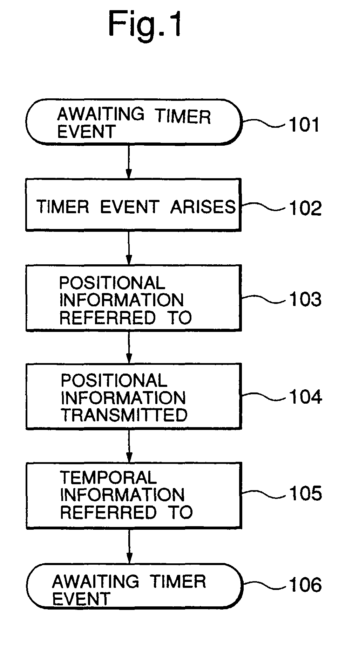

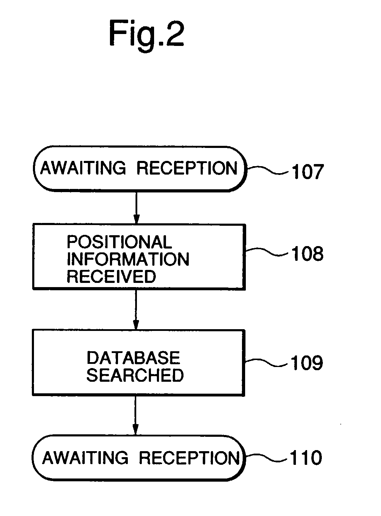

A first preferred embodiment of the invention is intended, in a client-server system, for a client computer to search databases on the basis of positional information transmitted from a server computer. FIG. 1 is a flow chart showing the flow of processing by the server computer, and FIG. 2, a flow chart showing the flow of processing in the client computer.

Referring to FIG. 1, when a timer event arises (step 102) in a timer event awaiting state (step 101), the server computer refers to positional information (step 103), and transmits this positional information to the client computer (step 104). After transmitting the positional information, the server computer refers to temporal information (step 105), sets the timer to a time prescribed by this temporal information, and resumes waiting for a timer event (step 106).

Referring to FIG. 2, when the client computer in a reception awaiting state (step 107) receives positional information from the server computer (step 108), searches databases on the basis of this positional information (step 109), and resumes waiting for reception (step 110).

This enables the client computer to acquire data from a database, with no input from the user, on the basis of positional information and temporal information stored in the server computer.

The aforementioned temporal information can be set in terms of either a point of time denoted in hours, minutes and seconds (absolute temporal information) or a time interval from a certain reference point of time (relative temporal information).

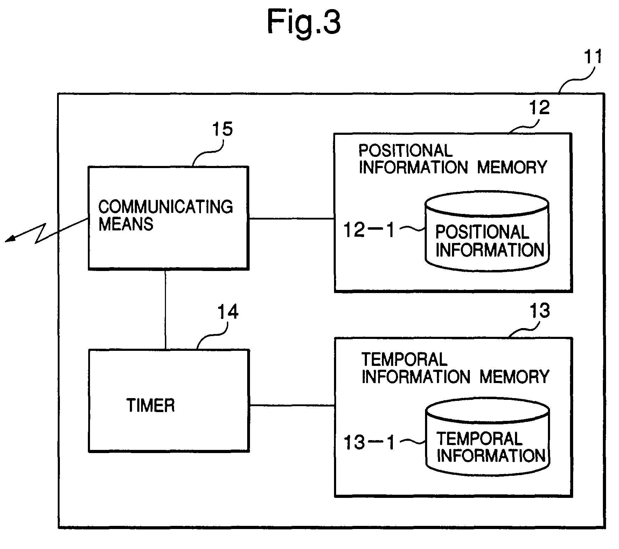

FIG. 3 is a block diagram illustrating a configuration of a directory information providing apparatus in the first preferred embodiment of the invention (corresponding to Claim 2).

Referring to FIG. 3, a directory information providing apparatus 11 comprises a positional information memory 12, a temporal information memory 13, a timer 14 and communicating means 15.

The timer 14 operates in accordance with temporal information 13-1 stored in the temporal information memory 13. Thus, when a time designated by the temporal information 13-1 has elapsed (corresponding to step 102 in FIG. 1), positional information 12-1 stored in the positional information memory 12 is transmitted to a user terminal (not shown) via the communicating means 15.

This enables the user terminal to receive the positional information transmitted from the directory information providing apparatus 11 and, on the basis of this positional information, to acquire data from a database with no input from the user.

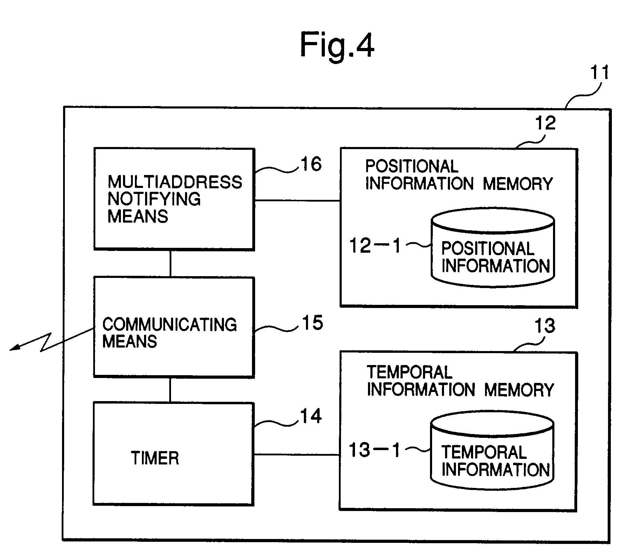

FIG. 4 is a block diagram illustrating another configuration of the directory information providing apparatus in the first preferred embodiment of the invention (corresponding to Claim 3).

Referring to FIG. 4, the directory information providing apparatus 11 comprises a positional information memory 12, a temporal information memory 13, a timer 14, communicating means 15 and multiaddress notifying means 16.

The timer 14 operates in accordance with temporal information 13-1 stored in the temporal information memory 13, and, when a time designated by the temporal information 13-1 has elapsed, positional information 12-1 stored in the positional information memory 12 is transmitted to a user terminal via the multiaddress notifying means 16 and the communicating means 15.

Thus, the multiaddress notifying means 16, manages the connections to a plurality of user terminals (not shown) connected to the directory information providing apparatus 11 and, when a plurality of user terminals are connected, notifies information regarding the addresses of user terminals to which positional information is to be transmitted to the communication means 15. As a result, the communicating means 15 transmits the same positional information to a plurality of user terminals.

This enables the user terminals to receive the positional information transmitted from the directory information providing apparatus 11 and, on the basis of this positional information, to acquire data from a database with no input from the user. It also enables a plurality of users to access the same data simultaneously and thereby to share to access the same data simultaneously and thereby to share the data among mutually distant places via a network.

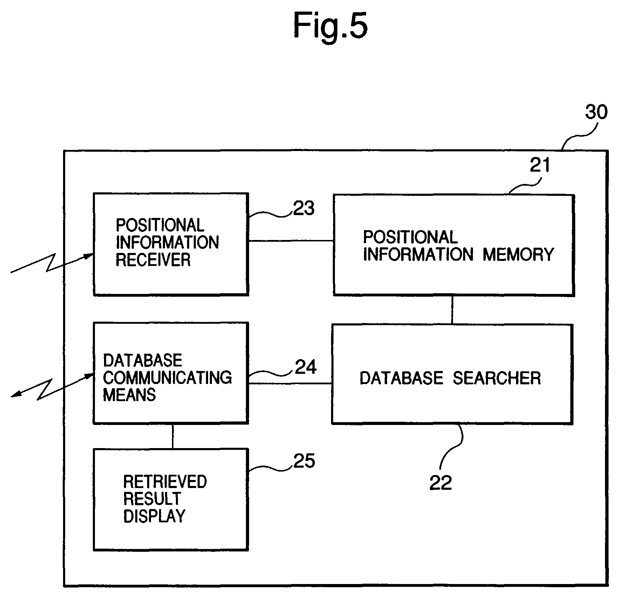

FIG. 5 is a block diagram illustrating a configuration of a database retrieval apparatus in the first preferred embodiment of the invention (corresponding to Claim 4).

Referring to FIG. 5, a database retrieval apparatus 30 comprises a positional information memory 21, database searcher 22, a positional information receiver 23, database communicating means 24 and a retrieved result display 25.

The positional information receiver 23, upon receiving positional information from the aforementioned directory information providing apparatus 11, stores it into the positional information memory 21.

The database searcher 22 refers to the positional information stored in the positional information memory 21, communicates with a database on the network via the database communicating means 24, receives the retrieved information, and displays it on the retrieved result display 25.

The database retrieval apparatus 30 in this embodiment of the invention can acquire, without waiting for input interfacing by a user, data from a database on the basis of positional information transmitted from the directory information providing apparatus, and display the retrieved result.

If a plurality of users receive the same positional information, they can access the same data simultaneously, and share the data among mutually distant places via a network.

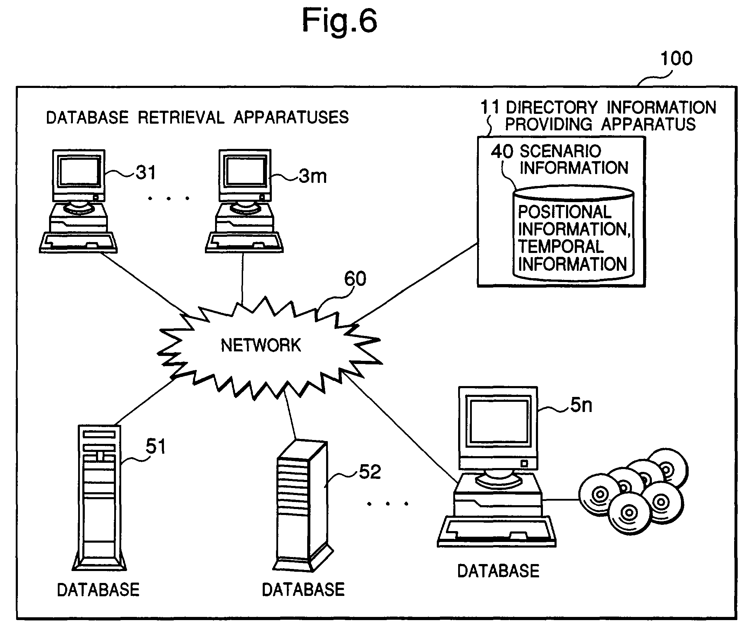

FIG. 6 is a block diagram illustrating a configuration of a database retrieval system which is the first preferred embodiment of the invention (corresponding to Claim 5 or 6).

Referring to FIG. 6, a database retrieval system 100 comprises the directory information providing apparatus 11, a plurality of database retrieval apparatuses 31 to 3m and a plurality of databases 51 to 5n, all connected via a network.

The directory information providing apparatus 11, which stores scenario information 40 (information describing what positional information should be transmitted and when) consisting of positional information and temporal information, transmits positional information prescribed by the scenario information 40 to a database retrieval apparatus 3k (k may be any integer from l to m) in accordance with temporal information prescribed by the scenario information 40.

The database retrieval apparatus 3k, on the basis of positional information received from time to time from the directory information providing apparatus 11, accesses the databases 51 to 5n scattered on the network, and receives data designated by the positional information from the corresponding database.

When a plurality of database retrieval apparatuses are accessing the same scenario information, the same positional information is simultaneously transmitted to this plurality of database retrieval apparatuses. The plurality of database retrieval apparatuses simultaneously access the same database and acquire the same data.

This enables the database retrieval apparatus to acquire data from a database, with no input from the user, on the basis of positional information transmitted from the directory information providing apparatus. It also enables a plurality of users to access the same data simultaneously and thereby to share the data among mutually distant places via a network.

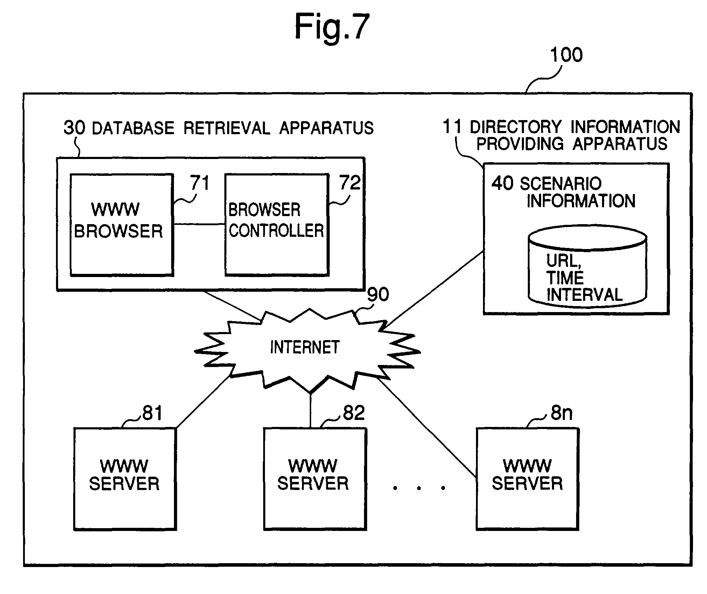

FIG. 7 is a diagram illustrating the configuration of the embodiment of the present invention when applied to searching of WWW servers by using a WWW browser on Internet.

Referring to FIG. 7, the database retrieval system 100 consists of the directory information providing apparatus 11, the database retrieval apparatus 30 and a plurality of WWW servers 81 to 8n, all connected via Internet.

The database retrieval apparatus 30 comprises a WWW browser 71 and a browser controller 72.

The directory information providing apparatus 11 stores scenario information 40 consisting of a uniform resource locator (URL: information to designate the location of a file) and information designating the time intervals for transmitting the URL.

The directory information providing apparatus 11 transmits the URL prescribed by the scenario information 40 at designated time intervals to the database retrieval apparatus 30.

In the database retrieval apparatus 30, the browser controller 72 receives URLs from the directory information providing apparatus 11 from time to time, and enters them into the WWW browser 71.

The WWW browser 71, on the basis of the entered URLs, accesses the corresponding WWW server 8k (k may be any integer from l to n) on the Internet, downloads the home page of a designated URL and displays it on the WWW browser 71.

Thus, in the database retrieval system utilizing WWW, the user has only to look at the WWW browser screen as he or she would watch television, and can see and hear information on the home page that is delivered from the WWW server.

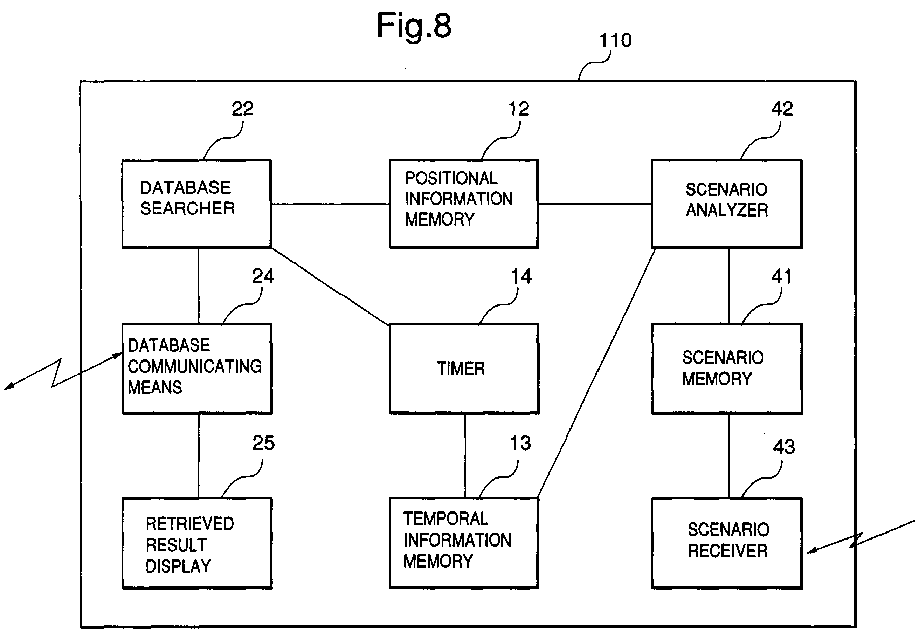

FIG. 8 is a diagram illustrating a configuration of a database retrieval apparatus in a second preferred embodiment of the invention (corresponding to Claim 7).

Referring to FIG. 8, a database retrieval apparatus 110 comprises a scenario receiver 43, a scenario memory 41, a scenario analyzer 42, a positional information memory 12, a temporal information memory 13, a timer 14, database searcher 22, and database communication means 24.

When the scenario receiver 43 receives scenario information (information describing what positional information should be transmitted and when) comprising positional information and temporal information, this scenario information is stored in the scenario memory 41. The scenario analyzer 42 analyzes the scenario information stored in the scenario memory 41, and stores the positional information and the temporal information, both obtained by the analysis, in the positional information memory 12 and the temporal information memory 13, respectively.

The timer 14 operates in accordance with the temporal information stored in the temporal information memory 13, and, when a time designated by the temporal information has elapsed, the database searcher 22 refers to the positional information stored in the positional information memory 12, communicates via the database communicating means 24 with the database corresponding to that positional information on the network, receives the retrieved information, and displays it on the retrieved result display 25.

The database retrieval apparatus 100 in this embodiment of the invention can acquire, without waiting for input interfacing by a user, data from a database on the basis of temporal information and positional information stated in the received scenario information, and display the retrieved result.

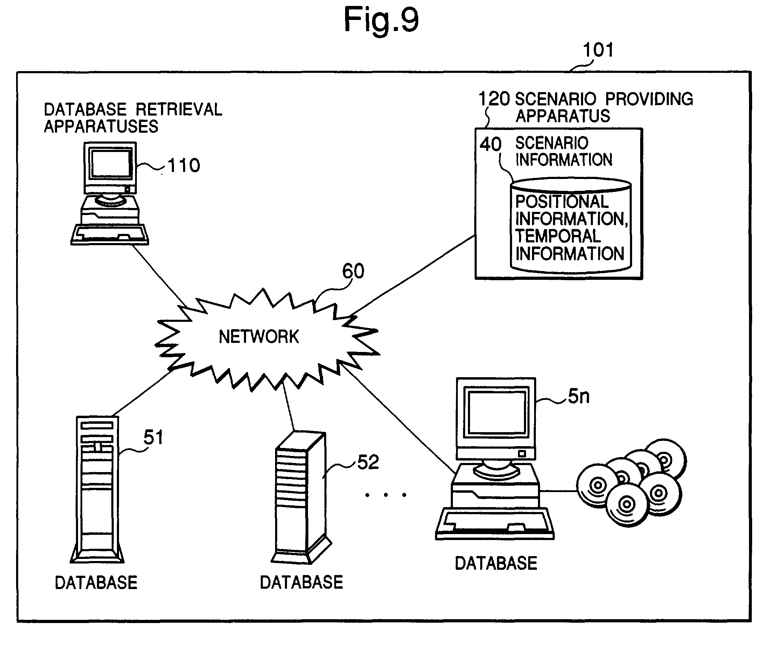

FIG. 9 is a block diagram illustrating a configuration of a database retrieval system which is the second preferred embodiment of the invention (corresponding to Claim 8).

Referring to FIG. 9, the database retrieval system 101 comprises a scenario providing apparatus 120, a database retrieval apparatus 110, and a plurality of databases 51 to 5n, all connected via a network 60.

In the scenario providing apparatus 120 is stored scenario information 40 containing positional information and temporal information. The database retrieval apparatus 110 receives the scenario information 40 from the scenario providing apparatus 120, analyzes it, accesses one of the databases 51 to 5n corresponding to the positional information in the scenario information 40 at a time prescribed by the scenario information 40, and receives from the corresponding database the data designated by that positional information.

This enables the database retrieval apparatus to receive the scenario information transmitted from the scenario providing apparatus and on that basis, with no input from the user, acquire data from the database.

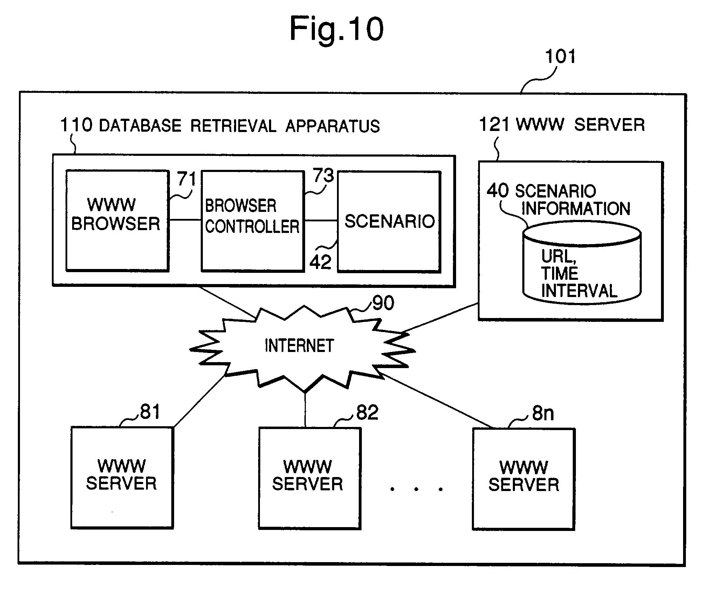

FIG. 10 is a diagram illustrating the configuration of the embodiment of the present invention when applied to searching of WWW servers by using a WWW browser on Internet.

Referring to FIG. 10, the database retrieval system 101 comprises the directory information providing apparatus 110 and a plurality of WWW servers 81 to 8n, all connected via Internet 90. The database retrieval apparatus 30 consists of a WWW browser 71, a browser controller 72 and a scenario analyzer 42. The WWW server 121 stores scenario information 40 comprising URLs and information to designate the time intervals at which the URLs are to be transmitted.

Upon request from a user, the scenario information 40 stored in the WWW server 121 is downloaded to the database retrieval apparatus 110. In the database retrieval apparatus 110, the scenario analyser 42 analyzes the scenario 40 to acquire the time intervals and a URL, and the browser controller 73 enters the scenario-prescribed URL into the WWW browser 71 at the prescribed time intervals. The WWW browser 71 accesses the corresponding WWW server 8k on the Internet on the basis of the entered URL, downloads the home page of the designated URL, and displays it on the WWW browser 71.

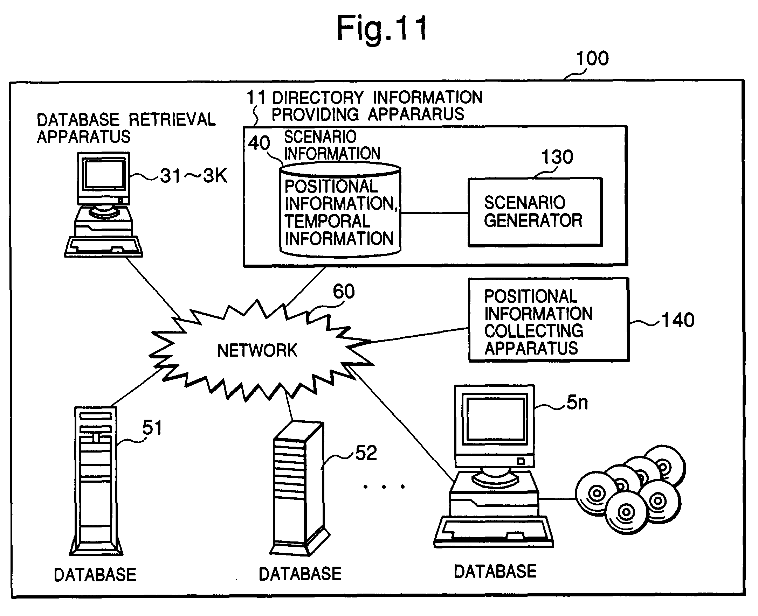

FIG. 11 is a diagram illustrating a configuration of a database retrieval system which is a third preferred embodiment of the invention (corresponding to Claim 9 or 10).

The database retrieval system 100 of FIG. 11 is similar to the database retrieval system of FIG. 6 except that the directory information providing apparatus 11 is equipped with a scenario generator 130 and a positional information collecting apparatus 140 is additionally provided.

The positional information collecting apparatus 140 collects positional information from databases on the network upon request from the directory information providing apparatus 11, and transmits it to the source of request. In the directory information providing apparatus 11, the scenario generator 130 generates scenario information 40 from the positional information received from the positional information collecting apparatus 140 and predetermined and internally held temporal information. The temporal information held in the directory information providing apparatus 11 may either hold in a fixed manner the time at which positional information is to be transmitted or hold the time that may vary with the positional information which is to be transmitted. The positional information prescribed by the scenario information 40 thereby generated is transmitted to the database retrieval apparatus 3k in accordance with the temporal information prescribed by the scenario information 40.

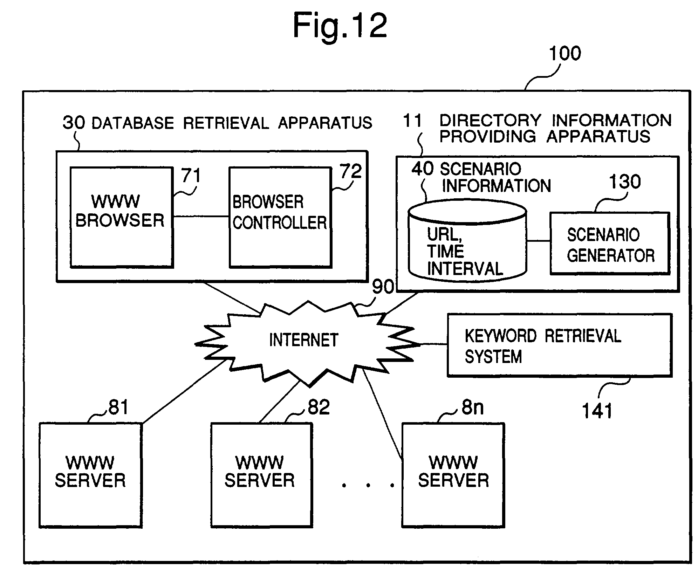

FIG. 12 is a diagram illustrating the configuration of the embodiment of the invention when, in the database retrieval system of FIG. 11, applied to searching of WWW servers by using a WWW browser on Internet. Here is described an embodiment using a keyword retrieval engine, such as "Yahoo!" typically.

A keyword entered by a user from the WWW browser 71 is transmitted to a keyword retrieval system 141 via the directory information providing apparatus 11, and the keyword retrieval system 141 transmits to the directory information providing apparatus 11 a group of URLs obtained by its keyword searching. The scenario generator 130 generates the scenario information 40 on the basis of the received group of URLs and the temporal information which is internally held in advance. Beyond that, the operation takes place in exactly the same way as in the database retrieval system of FIG. 6, and a WWW page is displayed on the WWW browser 71.

Some other system than a keyword retrieval system, such as a system for transmitting linked hyper text markup language (HTML) documents, can as well be used as positional information collecting apparatus. An HTML document having a plurality of links contains a plurality of URLs, which can be extracted to generate scenario information. Accessing a web site where a plurality of links are collected would result in transmission of those links arranged on a time axis, so that WWW pages can be automatically displayed one after another.

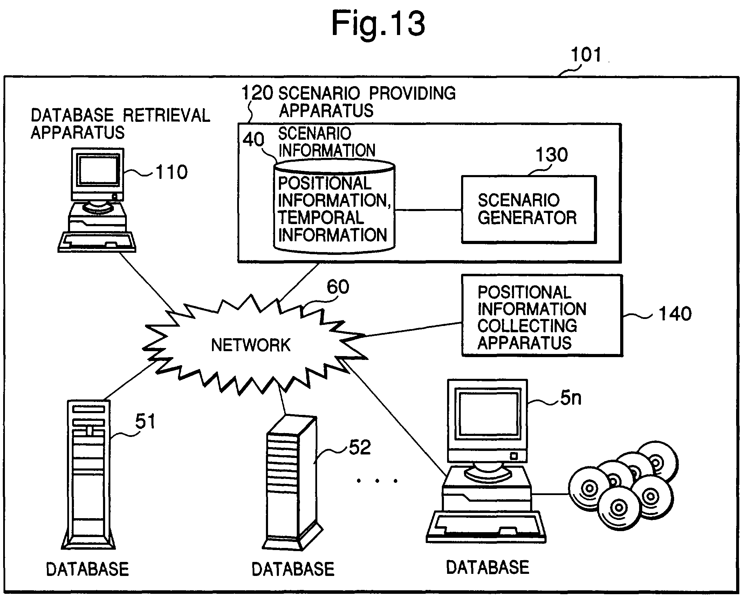

FIG. 13 is a diagram illustrating a configuration of a database retrieval system which is a fourth preferred embodiment of the invention (corresponding to Claim 11).

The database retrieval system 101 of FIG. 13 is similar to the database retrieval system of FIG. 9 except that the directory information providing apparatus 120 is equipped with a scenario generator 130 and the positional information collecting apparatus 140 is additionally provided.

The positional information collecting apparatus 140 collects positional information from databases on the network upon request from the scenario providing apparatus 120, and transmits it to the source of request. In the scenario providing apparatus 120, the scenario generator 130 generates scenario information 40 from the positional information received from the positional information collecting apparatus 140 and temporal information which is internally held in advance. The temporal information held in the scenario providing apparatus 120 may either hold in a fixed manner the time at which positional information is to be referred to or hold the time that may vary with the positional information which is to be referred to. The positional information prescribed by the scenario information 40 thereby generated is transmitted to the database retrieval apparatus 110 in accordance with the temporal information prescribed by the scenario information 40.

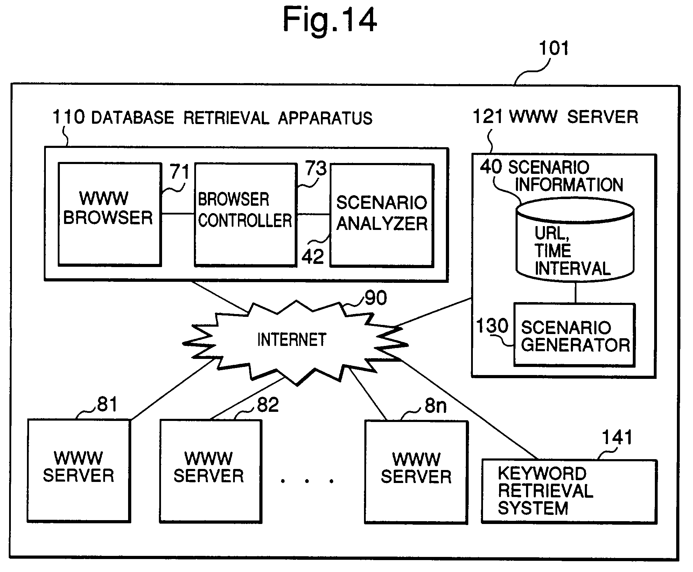

FIG. 14 is a diagram illustrating the configuration of the embodiment of the invention when, in the database retrieval system of FIG. 13, applied to searching of WWW servers by using a WWW browser on Internet. Here is described an embodiment using a keyword retrieval engine, such as "Yahoo!" typically.

A keyword entered by a user from the WWW browser 71 is transmitted to the keyword retrieval system 141 via the WWW server 121, and the keyword retrieval system 141 transmits to the WWW server 121 a group of URLs obtained by its keyword searching. The scenario generator 130 generates the scenario information 40 on the basis of the received group of URLs and the temporal information which is internally held in advance. Beyond that, the operation takes place in exactly the same way as in the database retrieval system of FIG. 9, and a WWW page is displayed on the WWW browser 71.

Some other system than a keyword retrieval system, such as a system for transmitting linked HTML documents, can as well be used as positional information collecting apparatus. An HTML document having a plurality of links contains a plurality of URLs, which can be extracted to generate scenario information. Accessing a web site where a plurality of links are collected would result in the generation of a scenario by arranging those links on a time axis, so that WWW pages can be automatically displayed one after another.

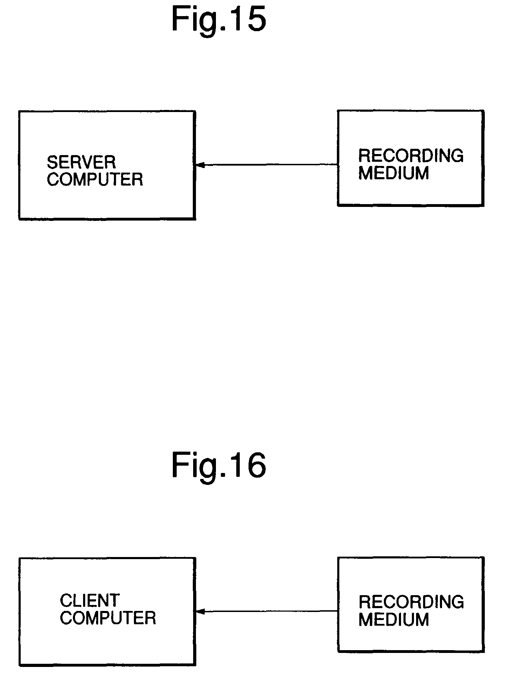

A fifth embodiment of the invention is equipped with a recording medium in which programs are stored. The programs cause a server computer to execute the same processing that the directory information providing apparatus executes in the first or the third embodiment, or the same processing that the scenario providing apparatus executes in the second or the fourth embodiment (FIG. 15), or cause a client computer to execute the processing which the database retrieval apparatus executes in any one of the first through the fourth embodiment (FIG. 16).

Therefore, the database retrieval system according to the present invention provides the benefit, as a database retrieval apparatus receives positional information transmitted from a directory information providing apparatus, database searching can be accomplished on the basis of this positional information with no input from the user.

Furthermore, the invention enables a passive user to search databases by having the provider of information designate temporal information and positional information. For instance, if the invention is applied to a database retrieval system utilizing WWW, the user has only to look at the WWW browser screen as if he or she was watching television, and see and hear information on the home pages sent from the WWW server.

In addition, where a plurality of database retrieval systems are accessing scenario information in the same directory information providing apparatus, the database retrieval system according to the invention provides another benefit of allowing a plurality of users to access the same data in the same database simultaneously and thereby enabling them to share data among mutually distant places via a network. Taking advantage of this benefit would make possible group education and presentation between mutually distant points.

Although the invention has been described in detail above with reference to various preferred embodiments thereof, it will be appreciated by those skilled in the art that these embodiments have been provided solely for the purpose of illustration, and are in no way to be regarded as limiting the scope of the invention. Instead, various modifications and substitutions of equivalent techniques will be readily apparent to those skilled in the art upon reading this specification, and such modifications and substitutions are to be regarded as falling within the true scope and spirit of the following claims.

## Claims

1. A database retrieval method comprising:
a first step in which a server computer transmits at a prescribed time positional information on data stored in a database on a network;
a second step in which a client computer receives said positional information; and
a third step in which the client computer acquires desired data from a position indicated by said positional information in said database on the network.

2. A directory information providing apparatus comprising:
a positional information memory for registering positional information on data stored in a database on a network;
a temporal information memory for registering temporal information indicating the time to transmit said positional information; and
communicating means for transmitting, at the time indicated by temporal information registered in said temporal information memory, positional information stored in said positional information memory to a user terminal.

3. A directory information providing apparatus, as claimed in Claim 2, wherein:
said communicating means manages a plurality of user terminals which are destinations, and transmits, at the time indicated by temporal information registered in said temporal information memory, positional information stored in said positional information memory to said plurality of user terminals which are managed.

4. A database retrieval apparatus comprising:
positional information receiver for receiving positional information transmitted at a prescribed time; and
database retrieving means for acquiring desired data from the position, in said database on the network, indicated by said positional information received by said positional information receiver.

5. A database retrieval system comprising:
databases on a network;
a directory information providing apparatus equipped with a scenario information memory for storing scenario information containing positional information on data stored in said database on a network and temporal information indicating the time to transmit said positional information, and communicating means for transmitting, at the time indicated by the temporal information in the scenario information stored in said scenario information memory, the positional information in the scenario information stored in said scenario information memory; and
a database retrieval apparatus equipped with a positional information receiver for receiving said positional information from said directory information providing apparatus, and a database searcher for acquiring desired data from the position, in said database on the network, indicated by said positional information received by said positional information receiver.

6. A database retrieval system comprising:
databases on a network;
a directory information providing apparatus equipped with a scenario information memory for storing scenario information containing positional information on data stored in said database on the network and temporal information indicating the time to transmit said positional information, and communicating means for managing a plurality of user terminals which are destinations, and transmitting, at the time indicated by the temporal information in the scenario information stored in said scenario information memory, the positional information in the scenario information stored in said scenario information memory to said plurality of user terminals which are managed; and
a database retrieval apparatus equipped with a positional information receiver for receiving said positional information from said directory information providing apparatus, and a database searcher for acquiring desired data from the position, in said database on the network, indicated by said positional information received by said positional information receiver.

7. A database retrieval apparatus comprising:
a scenario receiver for receiving scenario information including positional information on data stored in a database on a network and temporal information indicating the time to refer to said positional information;
a scenario analyzer for extracting said positional information and said temporal information by analyzing said scenario information received by said scenario receiver; and
a database searcher for referring, at the time indicated by said temporal information extracted by said scenario analyzer, to said positional information extracted by said scenario analyzer, and acquiring desired information from the position indicated by that positional information in said database on the network.

8. A database retrieval system comprising:
databases on a network;
a database retrieval apparatus equipped with a scenario receiver for receiving scenario information including positional information on data stored in a database on a network and temporal information indicating the time to refer to said positional information, a scenario analyzer for extracting said positional information and said temporal information by analyzing said scenario information received by said scenario receiver, and a database searcher for referring, at the time indicated by said temporal information extracted by said scenario analyzer, to said positional information extracted by said scenario analyzer, and acquiring desired information from the position indicated by that positional information in said database on the network; and
a scenario providing apparatus for providing said scenario information.

9. A database retrieval system, as claimed in Claim 5, further comprising:
a positional information collecting apparatus for collecting positional information on prescribed data stored in said database on a network, wherein:
said directory information providing apparatus is equipped with a scenario generator for generating scenario information from said positional information collected by said positional information collecting apparatus and temporal information internally held in advance.

10. A database retrieval system, as claimed in Claim 6, further comprising:
a positional information collecting apparatus for collecting positional information on prescribed data stored in said database on a network, wherein:
said scenario providing apparatus is equipped with a scenario generator for generating scenario information from said positional information collected by said positional information collecting apparatus and temporal information internally held in advance.

11. A database retrieval system, as claimed in Claim 8, further comprising:
a positional information collecting apparatus for collecting positional information on prescribed data stored in said database on a network, wherein:
said scenario providing apparatus is provided with a scenario generator for generating scenario information from said positional information collected by said positional information collecting apparatus and temporal information internally held in advance.

12. A computer-readable medium, comprising:
a computer-readable data storage device;
a directory information providing program on said device, said program causing a computer:
to transmit positional information stored in a database on a network at a prescribed time.

13. A computer-readable medium, comprising:
a computer-readable data storage device;
a directory information providing program on said device, said program causing a computer:
to register positional information on data stored in a database on a network;
to register temporal information indicating the time to transmit said positional information; and
to transmit, at the time indicated by said temporal information, said positional information to a user terminal.

14. A database retrieval method comprising:
a first step in which a server computer transmits scenario information containing positional information on data stored in a database on a network and temporal information indicating the time to refer to that positional information;
a second step in which a client computer receives said scenario information;
a third step in which the client computer extracts said positional information and said temporal information from said scenario information; and
a fourth step in which the client computer acquires desired information from the position indicated by said extracted positional information in said database on the network at the time indicated by said extracted temporal information.

15. A computer-readable medium, comprising:
a computer-readable data storage devide;
a database retrieving program on said device, said program causing a computer:
to receive scenario information containing positional information on data stored in a database on a network and temporal information indicating the time to refer to that positional information;
to extract said positional information and said temporal information from said scenario information; and
to acquire desired data from the position indicated by said extracted positional information in said database on the network at the time indicated by said extracted temporal information.
